# EUROPEAN PATENT APPLICATION

(11) **EP 2 012 031 A1**
(43) Date of publication of application: **07.01.2009**
(21) Application number: 07737053.4
(22) Date of filing: 11.04.2007
(51) Int. Cl.: F16C 19/52, B60B 35/18, B60T 8/171, F16C 19/18, F16C 41/00, G01L 5/00

(54) **SENSOR-EQUIPPED BEARING FOR WHEEL**

(30) Priority: 24.04.2006 JP 2006119094
(71) Applicant: NTN Corporation, Osaka-shi, Osaka 550-0003 (JP)
(72) Inventor: OZAKI, Takayoshi, Iwata-shi, Shizuoka 438-0037 (JP); ISHIKAWA, Tomomi, Iwata-shi, Shizuoka 438-0037 (JP); NISHIKAWA, Kentarou, Iwata-shi, Shizuoka 438-0037 (JP)
(74) Representative: Müller, Wolfram Hubertus
(86) International application number: PCT/JP2007/000396
(87) International publication number: WO 2007/129448

(57) **Abstract**

To provide a sensor equipped wheel support bearing assembly, in which the sensor for detecting the load can be snugly and neatly installed in an automotive vehicle, the load acting on the vehicle wheel can be detected with high sensitivity and the cost of manufacture can be reduced during a mass production. The sensor unit 21 is mounted on an outer member 1, which is a stationary member of the wheel support bearing assembly. The sensor unit 21 includes a sensor mounting member 22 and at least one or more strain sensors 23 fitted to the sensor mounting member 22. The outer member 1 includes a knuckle contact portion contactable with a knuckle 16 and is provided with a cutout portion 17 defined in a portion of the knuckle contact portion 1a.

## Description

### BACKGROUND OF THE INVENTION

### (Field of the Invention)

The present invention relates to a sensor equipped wheel support bearing assembly having a load sensor built therein for detecting a load imposed on a bearing unit for a vehicle wheel.

### (Description of the Prior Art)

For safety travel of an automotive vehicle, the wheel support bearing assembly has hitherto been well known in the art, which is equipped with a sensor for detecting the rotational speed of each of automotive wheels. While the automobile traveling safety precaution is generally taken by detecting the rotational speed of a vehicle wheel of various parts, it is not sufficient with only the rotational speed of the wheel and, therefore, it is desired to achieve a control for safety purpose with the use of other kinds of sensor signals.

In view of the above, it may be contemplated to achieve the vehicle attitude control based on a load acting on each of the wheels during travel of an automotive vehicle. By way of example, a large load acts on the outside wheels during the cornering, on the wheels on one side during the run along left and right inclined road surfaces or on the front wheels during the braking, and, thus, a varying load acts on the vehicle wheels. Also, even in the case of the uneven live load, the loads acting on those wheels tend to become uneven. For this reason, if the loads acting on the wheels can be detected as needed, suspension systems for the vehicle wheels can be controlled beforehand based on results of detection of the loads so that the attitude of the automotive vehicle during the traveling thereof (for example, prevention of a rolling motion during the cornering, prevention of diving of the front wheels during the braking, and prevention of diving of the vehicle wheels brought about by an uneven distribution of live loads) can be accomplished. However, no suitable space for installation of the load sensor for detecting the load acting on the respective vehicle wheel is available and, therefore, the attitude control through the detection of the load is hardly realized.

Also, in the event in the near future the steer-by-wire is introduced and the system, in which the wheel axle and the steering come not to be coupled mechanically with each other, is increasingly used, information on the road surface comes to be required to transmit to the steering wheel hold by a driver by detecting a wheel axis direction load.

In order to meet those needs hitherto recognized, the wheel support bearing assembly has been suggested in which a strain sensor is affixed to an outer ring of the wheel support bearing assembly so that the strain can be detected. (See, for example, the Japanese Laid-open Patent Publication No. 2003-530565, published October 14, 2003.)

The outer ring of the wheel support bearing assembly is a bearing component part which has a raceway defined therein, requires a strength and is made by means of complicated manufacturing steps including, for example, turning, heat treatment, grinding and others. Accordingly, where the strain gauge is affixed to the outer ring such as disclosed in the patent document referred to above, problems arise that the productivity is low and the manufacturing cost thereof at high volume is increased.

### SUMMARY OF THE INVENTION

In view of the above, an object of the present invention is to provide a sensor equipped wheel support bearing assembly, in which the sensor for detecting the load can be snugly and neatly installed in an automotive vehicle, the load acting on the vehicle wheel can be detected with high sensitivity and the cost of manufacture can be reduced during a mass production.

The sensor equipped wheel support bearing assembly of the present invention is a wheel support bearing assembly for rotatably supporting a vehicle wheel relative to an automotive body structure and includes an outer member having an inner periphery formed with a plurality of rows of raceways defined therein, an inner member formed with raceways in face-to-face relation with the raceways in the outer member, a plurality of rows of rolling elements interposed between those raceways, and a sensor unit including a sensor mounting member and at least one or more strain sensors fitted to this sensor mounting member, in which the sensor unit is mounted on one of the outer member and the inner member, which is a stationary member, and in which the stationary member includes a knuckle contact portion contactable with a knuckle and has a cutout portion defined in the knuckle contact portion.

In the event that a load acts on the rotatable member as the automotive vehicle starts traveling, the stationary member undergoes deformation through the rolling elements and such deformation brings about a strain in the sensor unit. The strain sensor provided in the sensor unit detects the strain occurring in the sensor unit. By determining beforehand the relation between the strain and the load by means of a series of experiments and/or simulations, the load imposed on the vehicle wheel or a steering moment of the automotive vehicle can be detected from an output of the strain sensor. Also, the load so detected can be utilized the vehicle control of an automotive vehicle. The steering moment referred to above is a moment acting on a vehicle bearing unit at the time the automotive vehicle travels on a curved road surface.

Since in this wheel support bearing assembly the cutout portion is provided in a portion of the knuckle contact portions of the stationary member, the strain occurring in the stationary member can be detected with high sensitivity when the rigidity of the stationary member is partially lowered and the strain occurring at that portion, where the rigidity is lowered, detected with the strain sensor provided in the sensor unit. It is to be noted that the cutout portion serves to reduce the rigidity to a certain extent within the range of rigidity required for the wheel support bearing assembly.

Since the wheel support bearing assembly of the present invention is of a design, in which the carrier member and the sensor unit including at least one strain sensor fitted to the sensor mounting member is mounted on the stationary member, the sensor for the detection of the load can be snugly and neatly installed in the automotive vehicle. Since the sensor mounting member is a handy component part that is fitted to the stationary member, and when the strain sensor is fitted to that, it can be excellent in mass production and the cost can be reduced.

The sensor mounting member preferably has two contact fixing portions, through which the sensor mounting member is fixed to a peripheral surface of the stationary member, and those two contact fixing portions are positioned circumferentially on the peripheral surface of the stationary member in the same phase as the cutout portion.

The peripheral surface of the stationary member, which is matched in phase with the cutout portion, has a rigidity lower than the peripheral surface of the stationary member, which is in a phase different from the cutout portion, and, therefore, the strain tends to occur considerably. Accordingly, when the contact fixing portions of the sensor mounting member is so positioned as described above, the strain in the sensor mounting member increases and, by measuring this strain with the strain sensor, the strain occurring in the stationary member can be detected with high sensitivity.

In a preferred embodiment of the present invention, a first contact fixing portion of the two contact fixing portions in the sensor mounting member is arranged in the cutout portion and a second contact fixing portion of the two contact fixing portions is arranged at a portion of the stationary member, which is deformed largely in a radial direction.

The cutout portion is where the deformation occurring in the stationary member tends to appear most considerably. Accordingly, when the first and second contact fixing portions of the sensor mounting member is arranged such locations as described above, the sensor mounting member deforms considerably as a result that deformation of the cutout portion in the first contact fixing portion and deformation of the second contact fixing portion in a radial direction are composited. Since the strain in the sensor mounting member is measured with the strain sensor, the strain occurring in the stationary member can be detected with high sensitivity. It is to be noted that a portion of the stationary member, which is considerably deformed in the radial direction includes, for example, a peripheral surface of the stationary member.

The stationary member may be the outer member. In such case, the sensor unit has to be fitted to the outer member.

In the present invention, the sensor unit may be arranged at an upper or lower portion of the stationary member or both of the upper and lower portions thereof. In such case, the load acting on the automotive vehicle can be calculated in reference to an output from the train sensor.

Where the sensor unit is arranged at an upper or lower portion of the stationary member or both of the upper and lower portions thereof, it is recommended to employ an estimation section for estimating an external force acting on the wheel support bearing assembly or an acting force between a vehicle tire and a road surface, or an amount of preload in the wheel support bearing assembly, in reference to an output from the strain sensor.

When the external force acting on the wheel support bearing assembly or the acting force between the vehicle tire and the road surface, or the amount of preload in the wheel support bearing assembly is utilized in a vehicle control of the automotive vehicle, a meticulous vehicle control can be achieved.

Also, in the present invention, the sensor unit may be arranged at a forward or rearward portion of the stationary member, or forward and rearward portions thereof, with respect to a direction of travel of an automotive vehicle. In such case, the steering moment of the automotive vehicle can be calculated in reference to an output from the strain sensor.

Where the sensor unit is arranged at a forward or rearward portion of the stationary member, or forward and rearward portions thereof, with respect to a direction of travel of an automotive vehicle, it is recommended to employ a estimation section for estimating a steering moment acting on the wheel support bearing assembly or an amount of preload in the wheel support bearing assembly, in reference to an output from the strain sensor.

When the steering moment acting on the wheel support bearing assembly that can be obtained by the estimation section or the amount of preload in the wheel support bearing assembly is utilized in a vehicle control of the automotive vehicle, a meticulous vehicle control can be achieved.

A temperature sensor may be provided in the sensor mounting member.

Since the wheel support bearing assembly is susceptible to change in temperature during the use thereof, such change in temperature adversely affects the strain of the sensor mounting member or the operation of the strain sensor. Also, change in ambient temperature in the surroundings similarly affects adversely. When a temperature dependent characteristic of the strain sensor is corrected using an output from the temperature sensor, a highly accurate load detection can be accomplished.

At least one of an acceleration sensor and a vibration sensor may be provided in the sensor mounting member.

The provision of additional sensors such as, for example, the acceleration sensor and the vibration sensor on the sensor mounting member in addition to the strain sensor is effective in that the load and the status of the wheel support bearing assembly can be measured at one site and the wiring or the like can be simplified.

The strain sensor may be of a structure including an insulating layer formed on a surface of the sensor mounting member by means of printing and baking and an electrode and a strain measuring resistance element both formed on the insulating layer by means of printing and baking.

Where the strain sensor is formed as described above, no reduction in bonding strength which would result from aging such as occurring where the strain sensor is fixed by bonding to the sensor mounting member will occur and, therefore, the reliability of the sensor unit can be increased. Also, the processing is easy to perform, the cost can be reduced.

A sensor signal processing circuit unit may be disposed in proximity of the sensor unit, said sensor signal processing circuit unit including a sensor signal processing circuit for processing an output of the strain sensor.

When the sensor signal processing circuit unit is provided in the vicinity of the sensor unit, the labor incurred in wiring from the sensor unit to the sensor signal processing circuit unit can be simplified. Also, as compared with the case, in which the sensor signal processing circuit is arranged at a location outside the wheel support bearing assembly, the sensor signal processing circuit unit can be installed compactly.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a diagram showing a sectional view of a sensor equipped wheel support bearing assembly according to a first preferred embodiment of the present invention together with a block diagram of a conceptual construction of a detecting system therefor;
Fig. 2 is a front elevational view showing an outer member of the sensor equipped wheel support bearing assembly and a sensor unit employed therein;
Fig. 3A is a front elevational view of the sensor unit employed in the sensor equipped wheel support bearing assembly according to a first preferred embodiment;
Fig. 3B is a side view of the sensor unit employed in the sensor equipped wheel support bearing assembly according to a first preferred embodiment;
Fig. 4 is a front elevational view showing the outer member and the sensor unit both employed in the sensor equipped wheel support bearing assembly according to a second preferred embodiment of the present invention;
Fig. 5A is a front elevational view of the sensor unit according to a third preferred embodiment of the present invention;
Fig. 5B is a side view of the sensor unit shown in Fig. 5A;
Fig. 6 is a sectional view showing the sensor equipped wheel support bearing assembly according to a fourth preferred embodiment of the present invention;
Fig. 7A is a front elevational view of the sensor unit according to the fourth preferred embodiment;
Fig. 7B is a cross-sectional view taken along the line VIIB-VIIB in Fig. 7A;
Fig. 8A is a front elevational view of the sensor unit according to a fifth preferred embodiment of the present invention;
Fig. 8B is a side view of the sensor unit shown in Fig. 8A;
Fig. 9A is a front elevational view of the sensor unit according to a sixth preferred embodiment of the present invention;
Fig. 9B is a side view of the sensor unit shown in Fig. 9A;
Fig. 10 is a diagram showing a sectional structure of the sensor unit according to a modification;
Fig. 11 is a sectional view of the sensor equipped wheel support bearing assembly according to a seventh preferred embodiment of the present invention;
Fig. 12 is a front elevational view showing the outer member of the sensor equipped wheel support bearing assembly according to the seventh preferred embodiment, the sensor unit and a sensor signal processing circuit unit;
Fig. 13 is a top plan view showing the sensor signal processing circuit unit shown in Fig. 12;
Fig. 14 is a diagram showing a sectional view of the sensor equipped wheel support bearing assembly according to an eighth preferred embodiment of the present invention shown together with a block diagram showing a conceptual construction of the detecting system employed therein;
Fig. 15 is a front elevational view showing the outer member and the sensor unit both employed in the sensor equipped wheel support bearing assembly; and
Fig. 16 is a front elevational view showing the outer member and the sensor unit both employed in the sensor equipped wheel support bearing assembly according to a ninth preferred embodiment of the present invention.

### DETAILED DESCRIPTION OF THE EMBODIMENTS

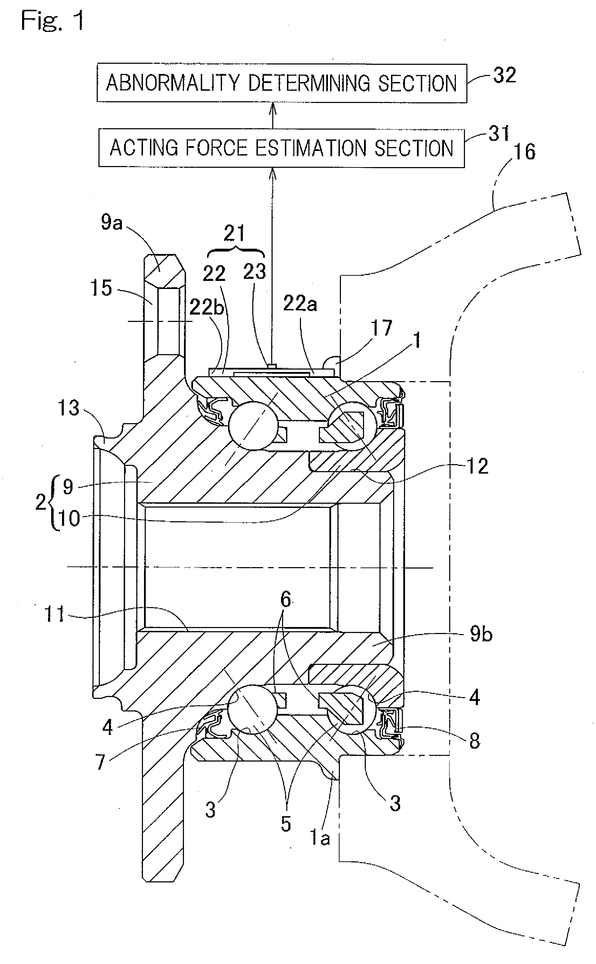

A first preferred embodiment of the present invention will be described in detail with particular reference to Figs. 1 to 3. This embodiment is directed to an inner race rotating model of a third generation type, which is applied to a wheel support bearing assembly for the support of a vehicle drive wheel. It is to be noted that hereinafter in this specification, terms "outboard" and "inboard" represent one side of a vehicle body away from the longitudinal center of the vehicle body and the other side of the vehicle body close to the longitudinal center of the vehicle body, respectively.

The sensor equipped wheel support bearing assembly according to this embodiment includes an outer member 1 having its inner periphery formed with a plurality of raceways 3, an inner member 2 formed with raceways 4 opposed to the respective raceways 3, and a plurality of rows of rolling elements 5 interposed between the raceways 3 of the outer member 1 and the raceways 4 of the inner member 2. This wheel support bearing assembly is in the form of a double row angular contact ball bearing type, in which the rolling elements 5 are employed in the form of balls that are rollingly retained by a retainer 6 employed for each row. The raceways 3 and 4 have an arcuately sectioned shape and the raceways 3 and 4 are so formed as to have a contact angle oriented outwardly. Opposite annular open ends of a bearing space delimited between the outer member 1 and the inner member 2 are sealed by respective sealing devices 7 and 8.

The outer member serves as a stationary member and is of one-piece construction in its entirety including a flange 1a formed in an outer periphery thereof as a knuckle contact member. The flange 1a has a plurality of vehicle body fitting holes 14 defined therein at respective circumferential locations thereof. The flange 1a also has an inboard surface formed flat and, with this flat surface held in contact with a knuckle 16 extending from a vehicle suspension system, the flange 1a is firmly connected with the knuckle 16 by means of bolts passed from the knuckle 16 and threaded into the vehicle body fitting holes 14. The flange 1a furthermore has an upper portion formed with a cutout portion 17 having the same outer peripheral diameter as that of than the remaining portion of the outer member 1 other than the flange 1a. This cutout portion 17 serves to reduce the rigidity of the outer member 1 to a certain extent within the range of rigidity required for the wheel support bearing assembly.

The inner member 2 serves as a rotating member and is made up of a hub axle 9 having a hub flange 9a for the support of a vehicle wheel, and an inner ring 10 mounted on an inboard end of a hub axle 9b of the hub axle 9. The hub axle 9 and the inner ring 10 are respectively formed with the raceways 4 referred to previously. The inboard end of the hub axle 9 has its outer periphery radially inwardly stepped to define an inner ring mounting area 12 of a reduced diameter, with the inner ring 10 fixedly mounted thereon. The hub axle 9 has a center bore 11 defined therein so as to extend completely through the length of the hub axle 9. The hub flange 9a has a plurality of press-fitting holes 15 defined in respective circumferential locations thereof for receiving the corresponding hub bolts (not shown) that are press-fitted therein. The hub flange 9a of the hub axle 9 has a root portion thereof formed with a cylindrical pilot portion 13 so as to protrude in an outboard direction, which pilot portion 13 serves to guide the vehicle wheel and brake components (not shown).

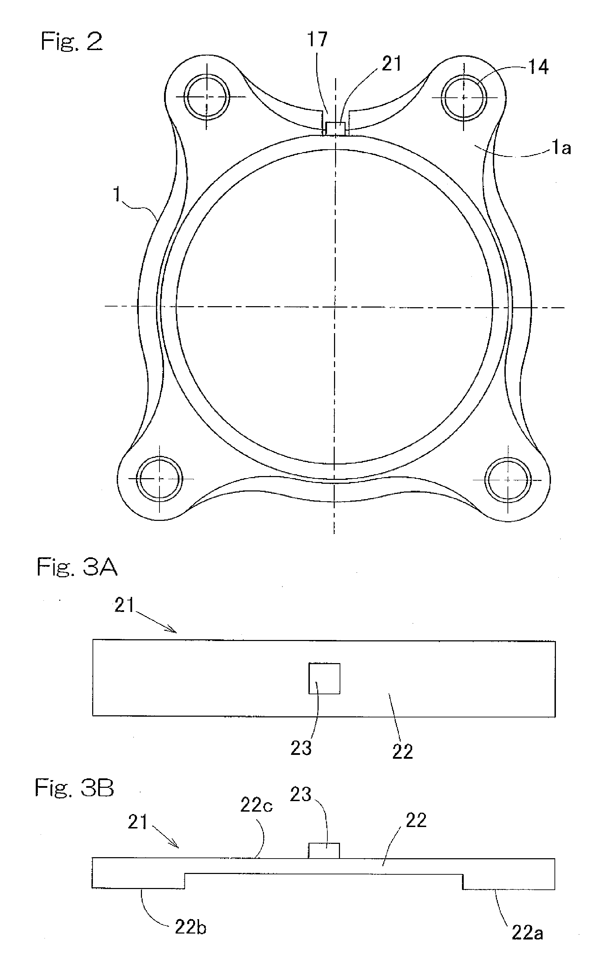

An outer peripheral portion of the outer member 1 is mounted with the sensor unit 21 as shown in Figs. 3A, 3B. This sensor unit 21 includes a sensor mounting member 22 and a strain sensor 23 mounted on the sensor mounting member 22 for measuring a strain induced in such sensor mounting member 22. The sensor mounting member 22 is in the form of an elongated thin plate member having and includes first and second contact fixing portions 22a and 22b provided in respective opposite ends thereof and an intermediate bridge 22c connecting between the contact fixing portions 22a and 22b. The strain sensor 23 is arranged on the intermediate connecting bridge 22c of the sensor mounting member 22 by means of, for example, a bonding agent.

As shown in Figs. 1 and 2, the sensor unit 21 of the construction described above is mounted on an upper portion of the outer member 1 with the first and second contact fixing portions 22a and 22b fixed to the outer member 1 by means of, for example, a bonding agent. At this time, the first and second contact fixing portions 22a and 22b are so arranged as to occupy respective circumferential positions in the same phase with the cutout portion 17 of the outer member 1 and are positioned with the first contact fixing portion 22a fixed to the cutout portion 17 and with the second contact fixing portion 22b fixed to the outer peripheral surface of the outer member 1. The axial position of the outer member 1, to which the sensor unit 21 is fitted through the second contact fixing portion 22b is so chosen as to lie on an outboard side adjacent an outboard end of the outer member 1, for example, on an outboard side of the outboard raceway 3. The sensor mounting member 22 is formed in such a shape and is made of such a material that the sensor mounting member 22 will not undergo a plastic deformation when being fixed to the outer member 1.

Also, the sensor mounting member 22 is required to have such a shape that no plastically deformation occurs in the sensor mounting member 22 even when a maximum expected load is applied to the wheel support bearing assembly. The maximum expected force referred to above is a maximum force that can be assumed during the travel of the automotive vehicle that does not lead to a trouble in such automotive vehicle. Once the sensor mounting member 22 is plastically deformed, deformation occurring in the outer member 1 will not be transmitted to the sensor mounting member 22 accurately, thus adversely affecting the measurement of the strain.

The sensor mounting member 22 of this sensor unit 21 may be manufactured by means of, for example, a press work. If the sensor mounting member 22 is a product prepared by the use of a press work, the cost can be reduced.

Also, the sensor mounting member 22 may be a product of a sintered metal that is formed by means of a powdery metal injection molding technique. The injection molding of a powdery metal is one of molding techniques used in molding a metal or an intermetallic compound and includes a step of kneading the powdery metal with a binder, a step of molding the kneaded mixture by means of an injection molding, a step of degreasing the resultant molded article and a step of sintering the molded article. With this injection molding of the powdery metal, some advantages can be appreciated where a sintered body of a high sintered density can be obtained as compared with the standard powdery metallurgy and a sintered metal product can also be prepared with a high dimensional accuracy and can have a high mechanical strength.

For the strain sensor 23, any of various sensors may be employed. For example, where the strain sensor 23 is in the form of a metallic foil strain gauge, in consideration of the durability of the metal foil strain gauge, the amount of strain occurring at a portion of the sensor mounting member 22 on which the strain sensor 23 is mounted is preferred to be smaller than 1500 microstrain even when the maximum expected load is applied on the wheel support bearing assembly. By a reason similar to that described above, where the strain sensor 23 is in the form of a semiconductor strain gauge, the amount of the strain is preferred to be smaller than 1000 microstrain. On the other hand, where the strain sensor 23 is in the form of a thick film type sensor, the amount of the strain is preferred to be smaller than 1500 microstrain.

As shown in Fig. 1, for processing an output of the strain sensor 23, an acting force estimation section 31 and an abnormality determining section 32 are employed. Those sections 31 and 32 may be those provided in an electronic circuit device (not shown) such as, for example, a circuit substrate fitted to the outer member 1 or the like of the wheel support bearing assembly or those provided in an electronic control unit (ECU) of an automotive vehicle.

The operation of the sensor equipped wheel support bearing assembly of the construction described hereinabove will now be described. When the load is imposed on the hub axle 9, the outer member 1 is deformed through the rolling elements 5 and such deformation is transmitted to the sensor mounting member 22 that is fitted to the outer member 1, resulting in a corresponding deformation of the sensor mounting member 22. The strain then occurring in the sensor mounting member 22 is measured by the strain sensor 23. At this time, the sensor mounting member 22 is deformed in accordance with deformation of the outer member 1, but since the opposite ends of the sensor mounting member 22 are fixed to the cutout portion 17 and a portion of the outer peripheral surface of the outer member 1 on the outboard side of the cutout portion 17, respectively, the deformation of the sensor mounting member 22 will be a composite deformation made up of respective deformations occurring at joints between that portion of the outer peripheral surface of the outer member 1 and those opposite ends of the sensor mounting member 22. In other words, the deformation occurring in the outer member 1 tends to appear most largely at the cutout portion 17, and the outer peripheral surface of the outer member 1 tends to be deformed largely in the radial direction. For this reason, the sensor mounting member 22 is deformed considerably. Since the strain sensor 23 measures the strain occurring in the sensor mounting member 22, a larger strain than the strain occurring in the outer member 1 can be obtained and the strain occurring in the outer member can be detected with high sensitivity.

Considering that variation of the strain differs depending on the direction and/or the magnitude of the load, by determining beforehand the relation between the strain and the load by means of a series of experiment and/or simulations, an external force acting on the wheel support bearing assembly or an acting force between a vehicle tire and the road surface can be calculated. The acting force estimation section 31 referred to previously is operable to estimate the external force acting on the wheel support bearing assembly or the acting force between the vehicle tire and the road surface in reference to an output from the strain sensor 23, using the relation between the strain and the load that has been determined by means of the experiments and/or simulations. On the other hand, the abnormality determining section 32 also referred to previously is operable to output an abnormality signal to the outside in the event that the external force acting on the wheel support bearing assembly and calculated by the acting force estimation section 31 and/or the acting force between the vehicle tire and the road surface having been calculated by the acting force estimation section 31 is determined exceeding a predetermined tolerance. This abnormality signal can be used in vehicle control of the automotive vehicle. Also, by outputting in real time the external force acting on the wheel support bearing assembly and/or the acting force between the vehicle tire and the road surface, a meticulous vehicle control can be achieved.

Also, considering that the wheel support bearing assembly is applied a preload through the inner ring 10, the sensor mounting member 22 undergo deformation by the effect of such preload. For this reason, by determining beforehand the relation between the strain and the preload by means of a series of experiment and/or simulations, a preloaded condition of the wheel support bearing assembly can be detected. The acting force estimation section 31 referred to previously is operable to calculate the amount of preload applied to the wheel support bearing assembly in reference to an output from the strain sensor 23, using the relation between the strain and the preload that has been determined beforehand by means of the experiments and/or simulations. When the amount of preload so calculated is utilized during the assemblage of the wheel support bearing assembly, the preload can easily be adjusted during such assemblage.

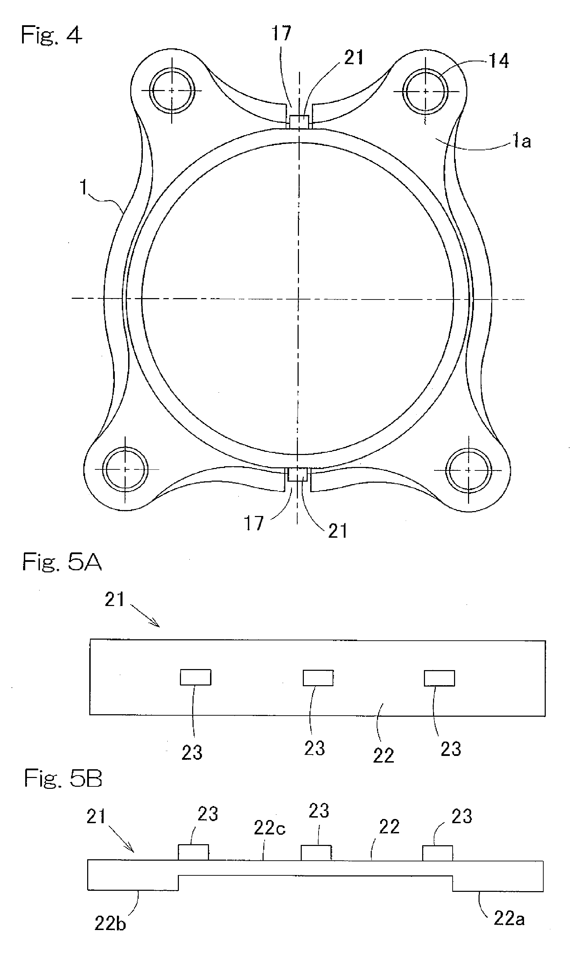

In the foregoing embodiment, the cutout portion 17 has been defined in the upper portion of the flange 1a of the outer member 1 and the sensor unit 21 has been arranged at one location in the upper portion of the outer member 1, but as employed in a second preferred embodiment of the present invention shown in Fig. 4, an additional cutout portion 17 may be defined at a lower portion of the flange 1a of the outer member and the sensor unit 21 may be arranged not only at that upper portion of the outer member 1, but also at a lower portion of the outer member. When the sensor unit 21 is arranged at such plural locations, the load can be detected highly accurately. As required, the sensor unit 21 may be arranged at only the lower portion of the outer member 1.

Also, although the sensor unit 21 employed in the foregoing embodiment has been shown and described as having the only sensor 23 mounted on the sensor mounting member 22, a plurality of strain sensors 23 may be mounted on the intermediate bridge 22c of the sensor mounting member 22 as shown in Figs. 5A, 5B in connection with a third preferred embodiment of the present invention. The use of the plural strain sensors 23 on the sensor mounting member 22 is effective to measure the strain occurring at respective portions of the sensor mounting member 22, where the strain sensors 23 are mounted, making it possible to achieve a further highly accurate load detection.

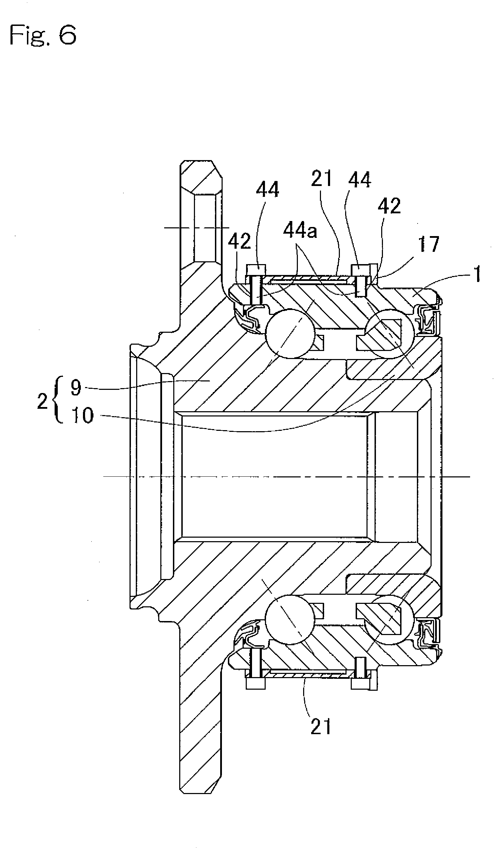

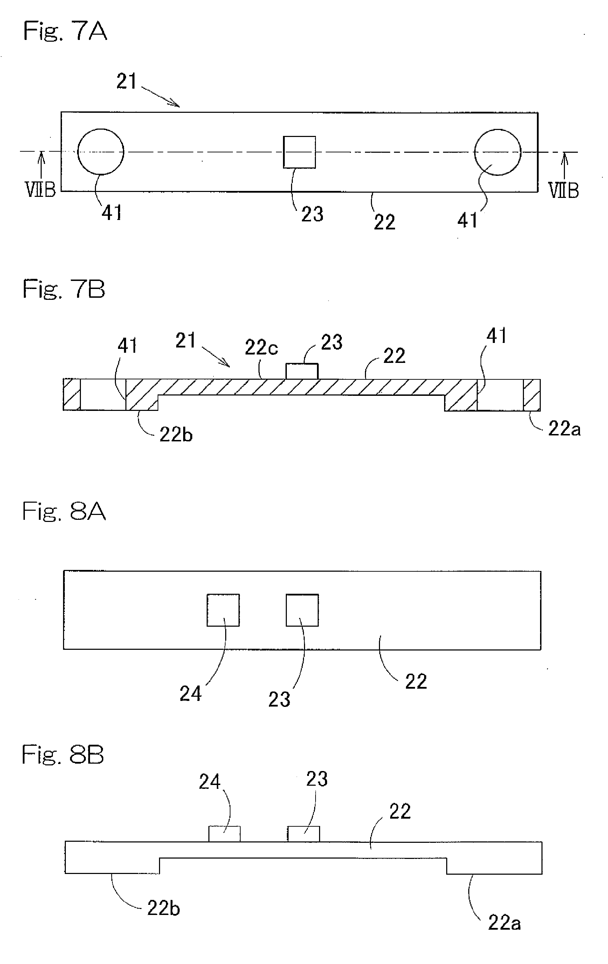

A fourth preferred embodiment of the present invention is shown in Figs. 6, 7A and 7B. This wheel support bearing assembly is so designed that the sensor mounting member 22 and the outer member 1 are fixed together by the use of bolts. As best shown in Figs. 7A, 7B, the sensor mounting member 22 is similar in overall shape to the sensor mounting member 22 shown in Figs. 3A, 3B and is formed with bolt insertion holes 41 defined respectively in the first and second contact fixing portions 22a and 22b so as to extend in a radial direction thereof. On the other hand, bolt threading holes 42 each in the form of a female thread having an inner peripheral surface thereof are formed in the outer peripheral surface of the outer member 1 at respective locations corresponding to the bolt insertion holes 41. As best shown in Fig. 6, the sensor unit 21 is secured to the outer member 1 with respective male threaded portions 44a of the bolts 44 passed from the outer periphery side through the associated bolt insertion holes 41 in the sensor mounting member 22 and then threadingly engaged in the corresponding bolt threading holes 42.

Fixing of the sensor mounting member 22 to the outer member 1 may be accomplished by the use of a bonding agent or the bolts. Alternatively, the both may be concurrently employed. In addition, without any of the bonding agent and the bolts being used, the sensor mounting member 22 and the outer member 1 may be fixed together by means of welding.

Whichever any one of those fixing methods is employed, the sensor mounting member 22 and the outer member 1 can be fixed together firmly. For this reason, the possibility can be prevented that the sensor mounting member 22 may displace in position relative to the outer member 1, and the deformation occurring in the outer member 1 can be accurately transmitted to the sensor mounting member 22.

Figs. 8A, 8B illustrate a fifth preferred embodiment of the sensor unit. This sensor unit 21 is provided with a temperature sensor 24 in addition to and separately of the strain sensor 23. It is to be noted that the sensor mounting member 22 has the same shape as that shown in and described with reference to Figs. 3A, 3B. For the temperature sensor 24, a platinum temperature measuring resistance, a thermocouple, or a thermister may be employed. In addition, other than those temperature measuring elements, any sensor capable of detecting the temperature may be employed.

Even in the wheel support bearing assembly provided with this sensor unit 21, the strain sensor 23 detect the strain occurring in the sensor mounting member 22 and the load imposed on the vehicle wheel measures in reference to such strain. In the meanwhile, the wheel support bearing assembly is susceptible to change in temperature during the use thereof and the change in temperature affects the strain in the sensor mounting member 22 and/or the operation of the strain sensor 23. In view of this, where the temperature of the sensor mounting member 22 is detected by the temperature sensor 24 arranged on the sensor mounting member 22 and an output from the strain sensor 23 is corrected with the temperature so detected, influence tending to be brought about by the temperature of the strain sensor 23 can be eliminated. Accordingly, the detection of the load with high accuracy can be achieved.

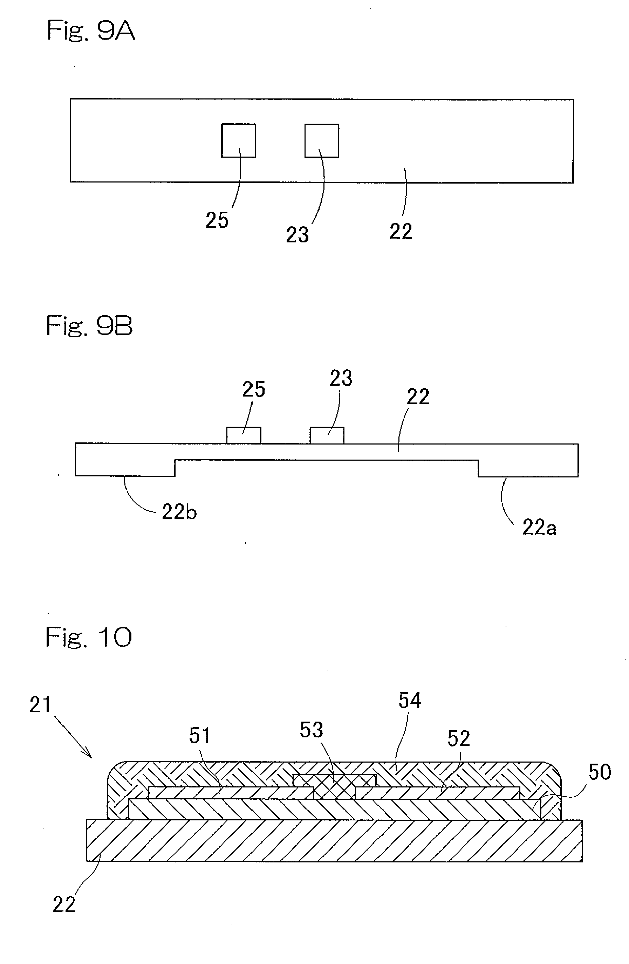

Figs. 9A, 9B illustrate a sixth preferred embodiment of the sensor unit. This sensor unit 21 is provided with an additional sensor 25, in addition to the strain sensor 23. The additional sensor 25 is at least one of an acceleration sensor and a vibration sensor. It is to be noted that the sensor mounting member 22 has the same shape as that shown in and described with particular reference to Figs. 3A, 3B.

As hereinabove described, by fitting the strain sensor 23 and the additional sensor 25 to the sensor mounting member 22, the load and the status of the wheel support bearing assembly can be measured at one site and the wiring or the like can be simplified.

Fig. 10 illustrates the structure of the sensor unit in which the strain sensor is formed by a method different from that according to any one of the foregoing embodiments. The sensor unit 21 shown therein is of a structure including an insulating layer 50 formed on the sensor mounting member 22, a pair of electrodes 51 and 52 formed on a surface of the insulating layer 50, a strain measuring resistance element 53, which eventually forms the strain sensor, formed over the insulating layer 50 and between the pair of the electrodes 51 and 52, and a protective film 54 formed over the electrodes 51 and 52 and the strain measuring resistance element 52.

A method of making such sensor unit 21 will be described hereinafter. At the outset, on a surface of the sensor mounting member 22 made of a metallic material such as a stainless steel or the like, an insulating material such as glass is printed and then baked to form the insulating layer 50. Subsequently, on a surface of the insulating layer 50 so formed, an electroconductive material is printed and then based to form the electrodes 51 and 52. Thereafter, between the electrodes 51 and 52 so formed, a material, which eventually form a resistance element, is printed and then baked to form the strain measuring resistance element 53. Finally, for protecting the electrodes 51 and 52 and the strain measuring resistance element 53, the protective film 54 is formed.

The strain sensor is generally fixed to the sensor mounting member 22 by means of bonding, but such a fixture may adversely affect the detection performed by the strain sensor when the bonding strength is lowered as a result of aging, and constitutes an increase of the cost. In contrast thereto, where the sensor unit 21 is of a structure in which the insulating layer 50 is formed by printing and baking on the surface of the sensor mounting member 22 and the electrodes 51 and 52 and the strain measuring resistance element 53, which forms the strain sensor, are formed by printing and baking, the reliability can be increased and the cost can be reduced.

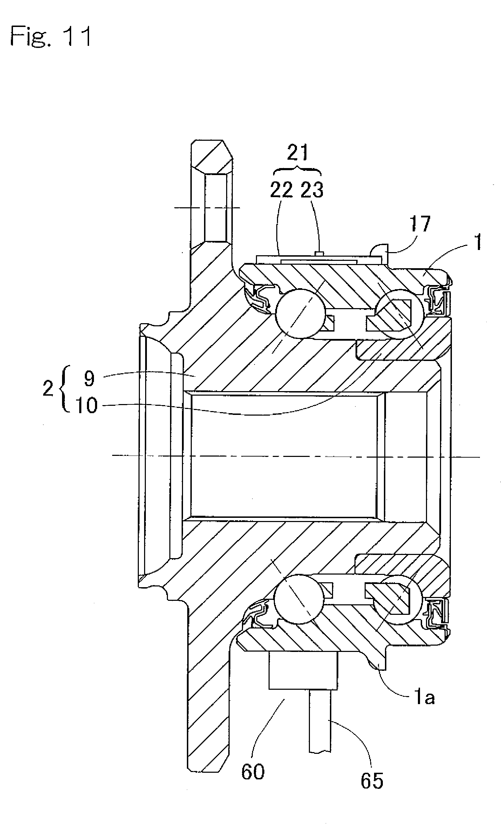

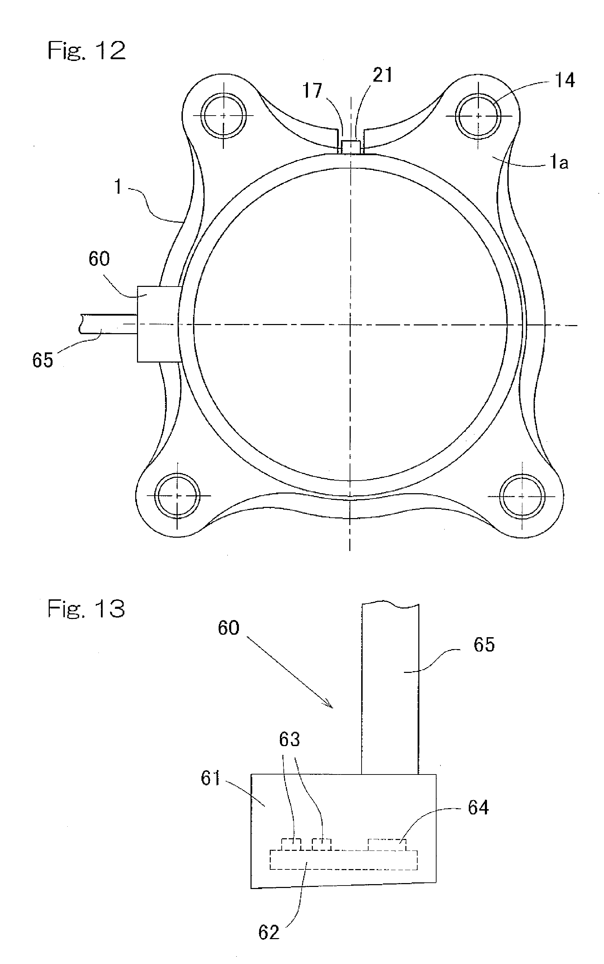

Figs. 11 to 13 illustrate a seventh preferred embodiment of the present invention. The wheel support bearing assembly shown therein has a sensor signal processing circuit unit 60 incorporated therein for processing respective outputs of the strain sensor and the various types of sensors (temperature sensor, acceleration sensor and vibration sensor), all provided in the sensor unit 21. This sensor signal processing circuit unit 60 is mounted on the outer peripheral surface of the outer member 1.

The sensor signal processing circuit unit 60 includes a circuit substrate 62 made of, for example, a glass epoxy or the like and accommodated within a housing 61 made of a resinous material or the like, and electric and electronic component parts 63 in the form of an operational amplifier, a resistor, and a microcomputer or the like for processing an output signal of the strain sensor 23, and a power supply for driving the strain sensor 23, are arranged on the circuit substrate 62. Also, the sensor signal processing circuit unit 60 has a connector 64 for connecting a wiring of the strain sensor 23 with the circuit substrate 62. In addition, it includes a cable 65 for the electric power supply from the outside and outputting therethrough to the outside output signals processed by the sensor signal processing circuit. Where the sensor unit 21 is provided with the previously described various sensors (temperature sensor, acceleration sensor and vibration sensor) such as in this embodiment, the sensor signal processing circuit unit 60 is provided with the circuit substrates 62, the electric and electronic component parts 63, the connectors 64, the cables 65 and so on, which are respectively associated with those sensors.

In general, the sensor signal processing circuit unit for processing the respective outputs of the sensors provided in the wheel support bearing assembly is provided in an electric control unit (ECU) of the automotive vehicle, but the provision of the sensor signal processing circuit unit 60 in the vicinity of the sensor unit 21 in the wheel support bearing assembly such as in this embodiment is effective to simplify the labor incurred in connecting the sensor unit 21 with the sensor signal processing circuit unit 60 by means of wiring, and the sensor signal processing circuit unit 60 can be more compactly installed than to provide the sensor signal processing circuit unit 60 at a location other than the wheel support bearing assembly.

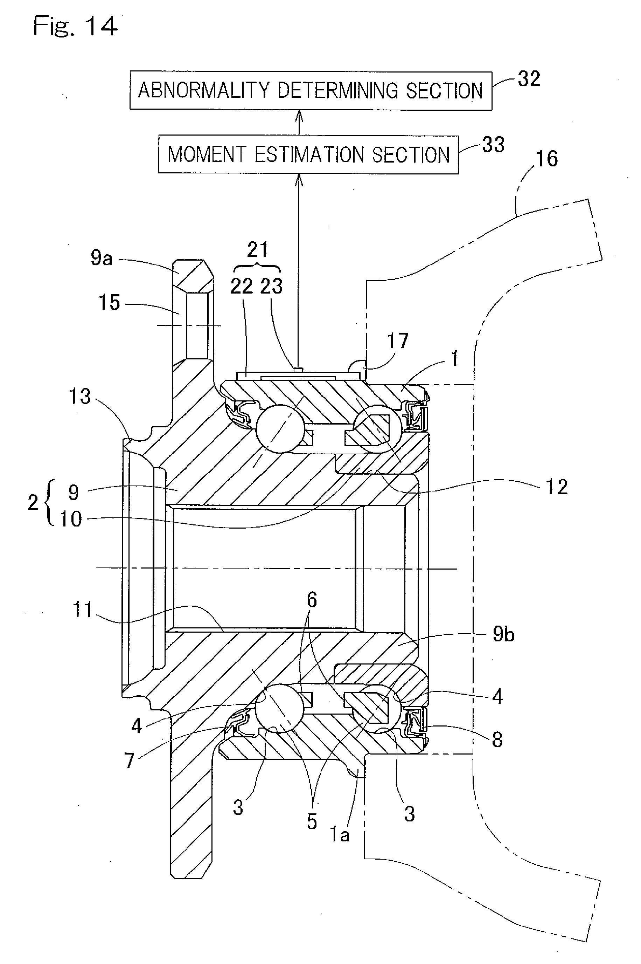

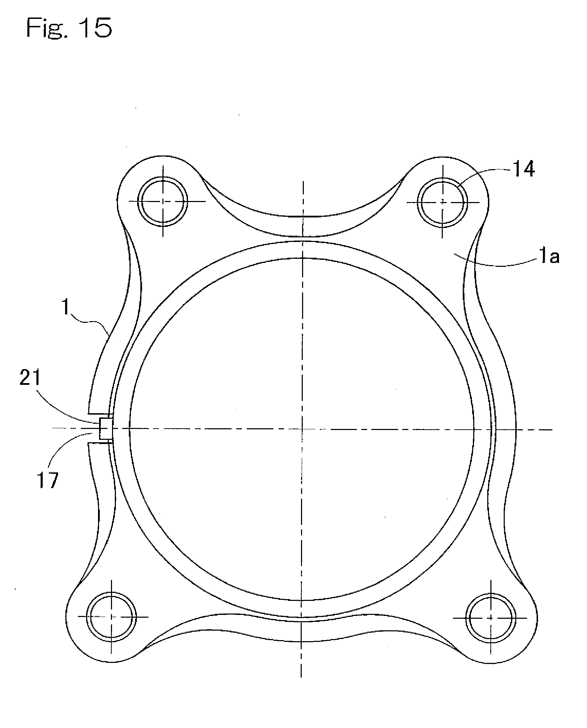

Figs. 14 and 15 illustrate an eighth preferred embodiment, which is similar to any one of the previously described embodiments, but differs therefrom in respect of the position at which the sensor unit 21 is arranged. While in any one of the previously described embodiments the sensor unit 21 is arranged at the upper or lower portions of the outer member 1 or both of those portions of the outer member 1, this embodiment is such that the sensor unit 21 is arranged at a forward portion of the outer member 1 with respect to the direction of travel of the automotive vehicle. Also, as best shown in Fig. 14, for processing the output of the strain sensor 23, a moment estimation section 33 is provided in place of the acting force estimation section 31 employed in any of the foregoing embodiments. Other than those structural features, this embodiment is substantially identical in construction with the embodiment shown in and described with particular reference to Figs. 1 to 3A, 3B and, therefore, like parts are designated by like reference numeral and the details are not reiterated for the sake of brevity.

Even in this embodiment, when the load is applied to the hub axle 9, the outer member 1 is deformed through the rolling elements 5 and such deformation is transmitted to the sensor mounting member 22, resulting in a corresponding deformation of the sensor mounting member 22. Even in this case, the strain sensor 23 provided in the sensor mounting member 22 can detect the strain then occurring in the outer member 1 with high sensitivity.

In this embodiment, the steering moment acting on the wheel support bearing assembly can be calculated from the relation between the strain and the load. The steering moment is a moment acting on the wheel support bearing assembly when the automotive vehicle travels along a curved road. The steering moment estimation section 33 referred to previously calculates the steering moment acting on the wheel support bearing assembly in reference to an output from the strain sensor 23, using the relation between the strain and the load that has been determined beforehand by means of the experiments and/or simulations. Based on this, the abnormality determining section 32 outputs an abnormality signal to the outside in the event that the steering moment acting on the wheel support bearing assembly is determined exceeding a predetermined tolerance. This abnormality signal can be used in vehicle control of the automotive vehicle. Also, by outputting the steering moment acting on the wheel support bearing assembly in real time, a meticulous vehicle control can be achieved.

Also, in a manner similar to that described hereinbefore, the condition of the preload in the wheel support bearing assembly can be ascertained from the relation between the strain and the preload. The moment estimation section 33 calculates the amount of preload imposed on the wheel support bearing assembly in reference to an output from the strain sensor 23, using the relation between the strain and the preload which has been determined beforehand by means of experiments and/or simulations. By utilizing the amount of preload so calculated in assemblage of the wheel support bearing assembly, the preload can easily be adjusted during the assemblage.

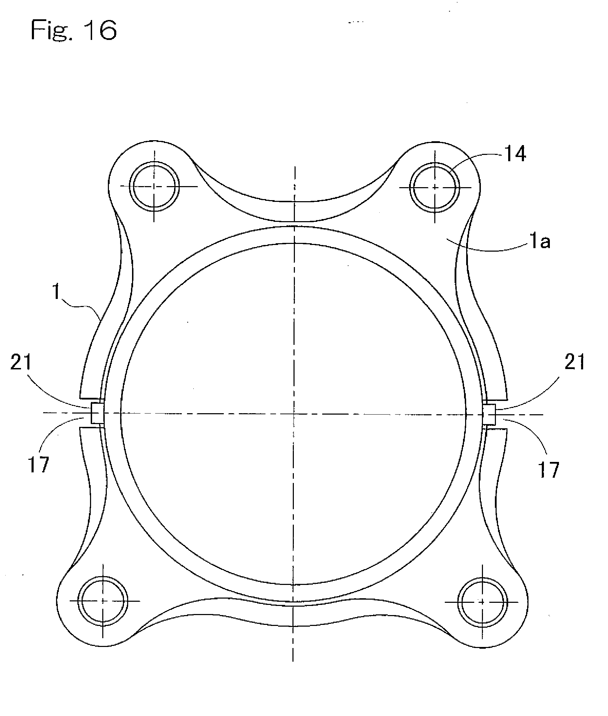

Although in this embodiment the sensor unit 21 has been shown and described as arranged at the forward portion of the outer member 1 with respect to the direction of travel of the automotive vehicle, the sensor unit 21 may be arranged at not only the forward portion of the outer member 1, but also a rearward portion of the outer member 1 with respect to the direction of travel of the automotive vehicle, as illustrated in the ninth preferred embodiment shown in Fig. 16. The arrangement of the sensor unit 21 at those plural portions, that is, forward and rearward portions, of the outer member 1 is effective to achieve a detection of the steering moment with high accuracy. If so desired, the sensor unit 21 may be arranged at only the rear portion of the outer member 1.

It is to be noted that although in describing any one of the foregoing various embodiments of the present invention, the outer member 1 has been shown and described as serving the stationary member, the present invention can be equally applied to the wheel support bearing assembly of a type in which the inner member serves as the stationary member and, in such case, the sensor unit 21 is provided on a peripheral surface which defines the inner periphery of the inner member.

Also, although any one of the foregoing embodiments of the present invention has been shown and described as applied to the wheel support bearing assembly of the three generation type, the present invention can be applied to the wheel support bearing assembly of the first or second generation type, in which the bearing unit and the hub unit are members separate from each other, and also to the wheel support bearing assembly of the fourth generation type in which a part of the inner member is constituted by an outer ring of the constant velocity universal joint. In addition, the sensor equipped wheel support bearing assembly can be applied to a wheel support bearing assembly for the support of a vehicle driven wheel and also to the wheel support bearing assembly of any generation type utilizing tapered rollers.

The present invention encompasses other preferred embodiments which can be practiced in any one of the following modes:

### [Mode 1]

Even when the maximum expected force, in the form of the external force acting on the stationary member or the acting force acting between the wheel tire and the road surface, is applied, the sensor unit will not be deformed plastically. Once the plastic deformation occurs in the sensor unit, deformation of the stationary member will not be transmitted to the sensor mounting member accurately and the strain measurement will therefore be adversely affected. The maximum expected force is a maximum force that can be expected during the travel of the automotive vehicle that does not lead to a trouble in such automotive vehicle.

### [Mode 2]

The sensor mounting member employed in the sensor equipped wheel support bearing assembly of the present invention can be manufactured by means of a press work. If the sensor mounting member is a product prepared by the use of a press work, the cost can be reduced.

### [Mode 3]

The sensor mounting member employed in the sensor equipped wheel support bearing assembly of the present invention may be a product of a sintered metal that is formed by molding a powdery metal with the use of a metal injection molding technique. By preparing the sensor mounting member using the powdery metal injection molding technique, the sensor mounting member having a dimensional accuracy can be obtained.

### [Mode 4]

Fixing of the sensor mounting member and the stationary member together may be carried out by the use of either a bonding agent or the bolts, or the both, or by the use of welding.

By fixing the sensor mounting member and the stationary member together by the use of any one of the above described fixing methods, the sensor mounting member and the stationary member can be fixed together firmly. For this reason, the sensor mounting member will not displace in position relative to the stationary member and the deformation of the outer member 1 can be accurately transmitted to the sensor mounting member.

## Claims

1. A sensor equipped wheel support bearing assembly for rotatably supporting a vehicle wheel relative to a vehicle body structure, which assembly comprises:
an outer member having an inner periphery thereof formed with a plurality of raceways;
an inner member formed with raceways in face-to-face relation with the respective raceways in the outer member;
a plurality of rows of rolling elements interposed between the respective raceways in the outer and inner members; and
a sensor unit including a sensor mounting member and at least one or more strain sensors fitted to the sensor mounting member;
wherein the sensor unit is mounted on one of the outer member and the inner member that serves as a stationary member; and
wherein the stationary member includes a knuckle contact portion contactable with a knuckle and has a cutout portion defined in the knuckle contact portion.

2. The sensor equipped wheel support bearing assembly as claimed in Claim 1, wherein the sensor mounting member has two contact fixing portions, through which the sensor mounting member is fixed to a peripheral surface of the stationary member, and those two contact fixing portions are positioned circumferentially on the peripheral surface of the stationary member in the same phase as the cutout portion.

3. The sensor equipped wheel support bearing assembly as claimed in Claim 1, wherein a first contact fixing portion of the two contact fixing portions in the sensor mounting member is arranged in the cutout portion and a second contact fixing portion of the two contact fixing portions is arranged at a portion of the stationary member, which is deformed largely in a radial direction.

4. The sensor equipped wheel support bearing assembly as claimed in Claim 1, wherein the stationary member is the outer member.

5. The sensor equipped wheel support bearing assembly as claimed in Claim 1, wherein the strain sensor is arranged on an uppermost or lowermost portion of the sensor mounting member or both of the uppermost and lowermost portions of the sensor mounting member.

6. The sensor equipped wheel support bearing assembly as claimed in Claim 5, further comprising an estimation section for estimating an external force acting on the wheel support bearing assembly or an acting force between a vehicle tire and a road surface, or an amount of preload in the wheel support bearing assembly, in reference to an output from the strain sensor.

7. The sensor equipped wheel support bearing assembly as claimed in Claim 1, wherein the strain sensor is arranged at a location of the sensor mounting member forwardly or rearwardly, or at both of those locations thereof, with respect to the direction of travel of the automotive vehicle.

8. The sensor equipped wheel support bearing assembly as claimed in Claim 7, further comprising a estimation section for estimating a steering moment acting on the wheel support bearing assembly or an amount of preload in the wheel support bearing assembly, in reference to an output from the strain sensor.

9. The sensor equipped wheel support bearing assembly as claimed in Claim 1, further comprising a temperature sensor provided in the sensor mounting member.

10. The sensor equipped wheel support bearing assembly as claimed in Claim 1, further comprising at least one of an acceleration sensor and a vibration sensor provided in the sensor mounting member.

11. The sensor equipped wheel support bearing assembly as claimed in Claim 1, wherein the strain sensor includes an insulating layer formed on a surface of the sensor mounting member by means of printing and baking and electrodes and a strain measuring resistance element both formed on the insulating layer by means of printing and baking.

12. The sensor equipped wheel support bearing assembly as claimed in Claim 1, further comprising a sensor signal processing circuit for processing an output signal of the strain sensor, provided in proximity of the sensor unit.
